(19) Europäisches Patentamt
European Patent Office
Office européen des brevets

(11) **EP 4 645 717 A1**

(12) **EUROPEAN PATENT APPLICATION**
published in accordance with Art. 153(4) EPC

(43) Date of publication:
05.11.2025 Bulletin 2025/45

(21) Application number: 23928374.0

(22) Date of filing: 17.11.2023

(51) International Patent Classification (IPC):
*H04B 10/2513* (2013.01)

(86) International application number:
PCT/CN2023/132405

(87) International publication number:
WO 2024/193070 (26.09.2024 Gazette 2024/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 17.03.2023 CN 202310304008

(71) Applicant: ZTE CORPORATION
Shenzhen, Guangdong 518057 (CN)

(72) Inventors:
• ZHONG, Yiming
  Shenzhen, Guangdong 518057 (CN)
• YANG, Bo
  Shenzhen, Guangdong 518057 (CN)
• ZHU, Songlin
  Shenzhen, Guangdong 518057 (CN)
• HUANG, Xingang
  Shenzhen, Guangdong 518057 (CN)
• YIN, Yongjia
  Shenzhen, Guangdong 518057 (CN)
• HE, Jiangyan
  Shenzhen, Guangdong 518057 (CN)
• LI, Mingsheng
  Shenzhen, Guangdong 518057 (CN)
• MA, Zhuang
  Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **SIGNAL COMPENSATION METHOD, ELECTRONIC DEVICE, AND PASSIVE OPTICAL NETWORK SYSTEM**

(57) The embodiments of the present application provide a signal compensation method, an electronic device, and a passive optical network system, and specifically relate to the field of communication. The method comprises: increasing signal chirp; by means of the increased chirp, generating a dispersion compensation amount; and by means of the dispersion compensation amount, compensating for a signal dispersion penalty.

S101

Increase a signal chirp

S102

Generate a dispersion compensation amount
through the increased chirp

S103

Compensate for a signal dispersion penalty
through the dispersion compensation amount

FIG. 1

**Description**

CROSS-REFERENCE TO RELATED APPLICATIONS

The present disclosure claims priority to the Chinese patent application No. 202310304008.6 filed on March 17, 2023 to the China Patent Office, and entitled "SIGNAL COMPENSATION METHOD, ELECTRONIC DEVICE, AND PASSIVE OPTICAL NETWORK SYSTEM", and the entire content of this application is incorporated in the present disclosure by reference.

TECHNICAL FIELD

The present application relates to the technical field of communication, in particular to a signal compensation method, an electronic device, and a passive optical network system.

BACKGROUND

In an optical access network based on the time division multiplexer-passive optical network (TDM-PON) technology, with the increasing requirement for the service throughput, the higher demand is put forward for a bandwidth of a passive optical network. Regarding a 50G PON and a 50G PON next-generation technology roadmap, the impact of optical fiber channel dispersion on signal quality is becoming increasingly severe.

In the related art, it is common to reduce a chirp and a dispersion amount in an optical fiber channel or use digital signal process (DSP) compensation to reduce the dispersion penalty of optical fiber transmission in a PON system. This scheme is complex and cannot fully compensate for the performance loss penalty.

SUMMARY

Embodiments of the present application aim to provide a signal compensation method, an electronic device, and a passive optical network system, which can solve the problems that, in the related art, a chirp compensation dispersion penalty in a PON system is lowered by reducing a chirp and a dispersion value in a channel or adopting a DSP balancing manner, and this scheme is complex and cannot fully compensate for the performance loss penalty.

To solve the above technical problems, the embodiments of the present application are implemented through various aspects below.

In a first aspect, an embodiment of the present application provides a signal compensation method, including: increasing a signal chirp; generating a dispersion compensation amount through the increased chirp; and compensating for a signal dispersion penalty through the dispersion compensation amount.

In a second aspect, an embodiment of the present application provides a passive optical network system, including: an OLT and an ONU connected through an ODN; and a processing unit, wherein the ONU is connected with the ODN through the processing unit, and the processing unit is configured to increase a signal chirp; generate a dispersion compensation amount through the increased chirp; and compensate for a signal dispersion penalty through the dispersion compensation amount.

In a third aspect, an embodiment of the present application provides an electronic device, including: a memory, a processor, and computer-executable instructions stored on the memory and capable of running on the processor. The computer-executable instructions, when executed by the processor, implement the steps of the method according to the first aspect above.

In a fourth aspect, an embodiment of the present application provides a computer-readable storage medium. The computer-readable storage medium is configured to store computer-executable instructions. The computer-executable instructions, when executed by a processor, implement the steps of the method according to the first aspect above.

BRIEF DESCRIPTION OF DRAWING(S)

To illustrate the technical solutions in embodiments of the present application or in the prior art more clearly, the accompanying drawings required for describing the embodiments or the prior art will be briefly introduced below. Apparently, the accompanying drawings in the following description are only some embodiments recorded in the present application, and a person of ordinary skill in the art may still derive other accompanying drawings from these accompanying drawings without creative efforts.

FIG. 1 is a first schematic flowchart of a signal compensation method provided by an embodiment of the present application.

FIG. 2a is a simulation diagram of signal magnitude attenuation in a 20 km optical fiber channel provided by an embodiment of the present application.

FIG. 2b is a schematic simulation diagram of a frequency response fading curve of a total chirp of a downlink signal provided by an embodiment of the present application.

FIG. 3a is a second schematic flowchart of a signal compensation method provided by an embodiment of the present application.

FIG. 3b is a simulation diagram of a dispersion penalty of a 1342 nm downlink wavelength in 20 km optical fiber transmission provided by an embodiment of the present application.

FIG. 4 is a third schematic flowchart of a signal compensation method provided by an embodiment of the present application.

FIG. 5 is a schematic diagram of a principle of a chirp grating provided by an embodiment of the present application.

FIG. 6 is a fourth schematic flowchart of a signal compensation method provided by an embodiment of the present application.

FIG. 7 is a schematic structural diagram of a passive optical network system provided by an embodiment of the present application.

FIG. 8 is an exemplary diagram of a signal algorithm compensation method provided by an embodiment of the present application.

DETAILED DESCRIPTION

In order to enable those skilled in the art to better understand the technical solution in the present application, the technical solution in embodiments of the present application will be described clearly and completely below with reference to the accompanying drawings in the embodiments of the present application. Obviously, the described embodiments are only part of the embodiments of the present application, rather than all of the embodiments. Based on the embodiments in the present application, all other embodiments obtained by those of ordinary skill in the art without creative efforts fall within the scope of protection of the present application.

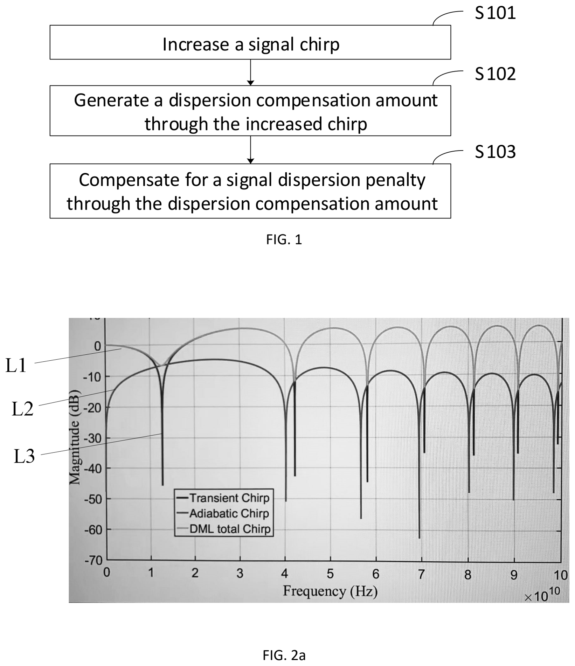

FIG. 1 shows a first schematic flowchart of a signal compensation method provided by an embodiment of the present application. As shown, the method may include the following steps.

S101: a signal chirp is increased.

Specifically, on the basis of researching and analyzing a chirp generating mechanism of existing optical devices, the embodiment of the present application creatively proposes that a dispersion penalty in a transmission channel may be compensated by increasing the signal chirp, thereby improving transmission performance, which overcomes the technical bias of compensating for the dispersion penalty by reducing a chirp.

In the present embodiment, a manner of increasing the signal chirp is not limited, as long as it can meet the requirements of the present application, i.e., belonging to the scope of protection of the present application.

S102: a dispersion compensation amount is generated through the increased chirp.

As an example, after a signal is emitted by a directly modulated laser (DML) and transmitted through an optical fiber channel, a magnitude-frequency response after chirp and optical fiber dispersion effect interaction may be represented by Formula (1) below:

$$H(f, L, I) = \underbrace{\sqrt{\alpha^2 + 1}\cos(\gamma L f^2 + \tan^{-1}\alpha)}_{H_{tst}(f,L)} + j\underbrace{\frac{\alpha k P}{2\pi f}\sin(\gamma L f^2)}_{H_{adb}(f,L)} \quad (1)$$

The first term $H_{tst}(f, L)$ on the right is a frequency response triggered by a first chirp, the second term $H_{adb}(f, L)$ on the right is a frequency response triggered by a second chirp, f denotes a frequency, L denotes an optical fiber transmission distance, and P is output power of the laser. In addition, $\gamma$ is a constant, and defined as: $\gamma = \pi D \lambda^2/c$, where D is a corresponding optical fiber dispersion coefficient, and c is a light speed in vacuum.

In a passive optical network (PON) system, a total magnitude-frequency response H of the signal is the superposition of the above frequency responses of the first chirp $H_{tst}$ and the second chirp $H_{adb}$, as shown in Formula (2).

$$|H(f, L, I)| = \sqrt{|H_{tst}(f, L)|^2 + |H_{adb}(f, L)|^2} \quad (2)$$

A frequency attenuation term triggered by the first chirp $H_{tst}$ produces a corresponding magnitude null when satisfying $\gamma L f^2 + \arctan\alpha = \pi/2 + n\pi (n=0,1,2 ...)$. As for the frequency response triggered by the second chirp $H_{adb}$, a corresponding magnitude null is produced when $\gamma L f^2 = n\pi (n=0,1,2 ...)$ is satisfied. According to the above frequency response null formulas of the first chirp and the second chirp, null frequency positions of the two are staggered, so when magnitude-frequency curves of the first chirp and the second chirp above are superposed, a case where part of frequency response points are compensated mutually occurs, that is, a dispersion compensation amount used to reduce power magnitude attenuation of the signal is generated.

Exemplarily, FIG. 2a shows a simulation diagram of signal magnitude attenuation in a 20 km optical fiber channel in a PON.

L1 is an impact on an in-bandwidth signal after the interaction of the superposition of the first chirp and the second chirp with optical fiber dispersion; L2 is magnitude attenuation of the in-bandwidth signal after the interaction of the second chirp with optical fiber dispersion; and L3 is magnitude attenuation of the in-bandwidth signal after the interaction of the first chirp with optical fiber dispersion. It can be observed that both chirps individually interacting with dispersion will cause power magnitude attenuation of the signal. However, maximum value points of power attenuation of the two chirps correspond to different frequencies, resulting in compensation by the second chirp at frequency locations where the first chirp experiences significant attenuation. In FIG. 2a, it is manifested that the magnitude attenuation of L1 essentially follows the trend of L3. However, at frequencies where L3 experiences significant attenuation, because the second chirp corresponding to L2 generates frequency-response-point compensation to L1, the magnitude attenuation of L1 is substantially smaller than that of L3. It is found by analyzing the results of FIG. 2a that by increasing the second chirp, the overall channel attenuation magnitude may be well compensated, reducing the dispersion penalty of optical fiber transmission. This overcomes the technical bias of compensating for the dispersion penalty by reducing a chirp, and solves the technical problem that chirp reduction cannot fully compensate for performance loss penalties.

Optionally, the above first chirp is a transient chirp, and the above second chirp is an adiabatic chirp.

S103: a signal dispersion penalty is compensated through the dispersion compensation amount.

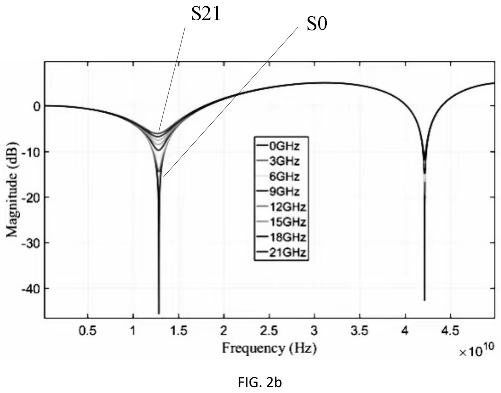

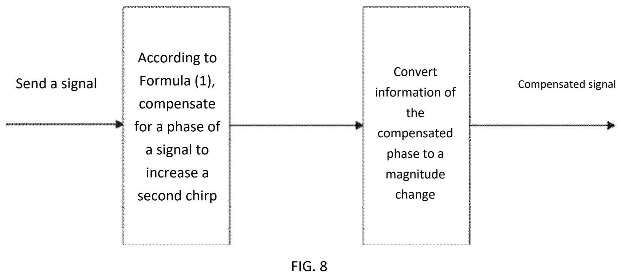

Specifically, the dispersion penalty includes but is not limited to at least one of inter-symbol interference, dispersion, noise or nonlinear performance of the signal. Exemplarily, FIG. 2b shows a simulation diagram of frequency response attenuation curves of a total chirp of a signal under different chirp coefficients in the 20 km optical fiber channel in the PON, where the abscissa axis represents a frequency of the signal, and the ordinate axis represents a transmission penalty of the signal. In FIG. 2b, 8 curves S21, S18, S15, S12, S9, S6, S3 and S0 from top to bottom are respectively frequency response attenuation curves with the chirp coefficients being 21 GHz, 18 GHz, 15 GHz, 12 GHz, 9 GHz, 6 GHz, 3 GHz and 0 GHz. When an abscissa is $1.3 \times 10^{10}$, the transmission penalty of the curve S0 is greater than -40 dB, while the transmission penalty of the curve S21 approaches 0 dB. Therefore, from the respective increasing ordinates at the time when the abscissa is $1.3 \times 10^{10}$ of the above 8 curves in FIG. 2b, it can be seen that with the increase of the chirp coefficient, a magnitude attenuation point of the signal in the transmission process in the optical fiber channel is elevated continuously, that is, the transmission penalty of the signal is being reduced.

Thus, the signal compensation method provided by the embodiment of the present application increases the signal chirp; generates the dispersion compensation amount through the increased chirp; and compensates for the signal dispersion penalty through the dispersion compensation amount. It can overcome the technical bias, and solve the problems that, in the related art, the optical fiber transmission dispersion penalty in a PON system is lowered by reducing a chirp and a dispersion amount in the optical fiber channel or adopting a DSP compensation manner, and this scheme is complex and cannot fully compensate for the performance loss penalty.

In an optional implementation, increasing the signal chirp includes increasing the signal chirp through at least one of the following: an active optical device; a passive optical device; or algorithm compensation.

Specifically, any one of the above manners can increase the chirp, and the active optical device and the passive optical device above may be existing devices, which can compensate for the signal dispersion penalty without being modified.

In an optional implementation, the chirp includes: the adiabatic chirp.

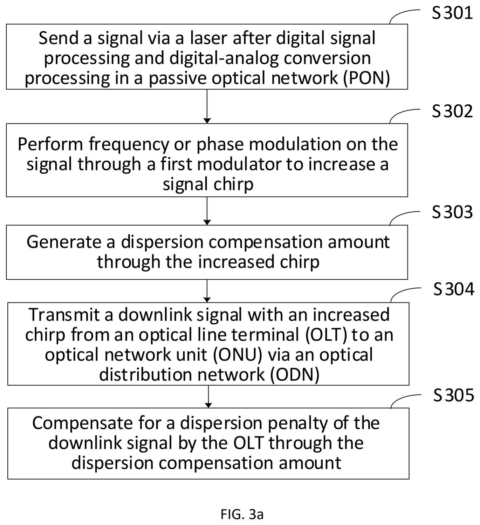

FIG. 3a shows a second schematic flowchart of a signal compensation method provided by an embodiment of the present application. As shown, the method may include the following steps.

S301: a signal is sent via a laser after digital signal processing and digital-analog conversion processing in a passive optical network (PON).

Specifically, the above digital signal processing is used to compensate the signal to reduce distortion of the signal in the transmission process. Optionally, the above digital signal processing may adopt any one method of pre-emphasis, de-emphasis, and equalization. The above digital-analog conversion processing is used to convert a data bit stream into an analog signal, i.e., the signal.

S302: frequency or phase modulation is performed on the signal through a first modulator to increase a signal chirp.

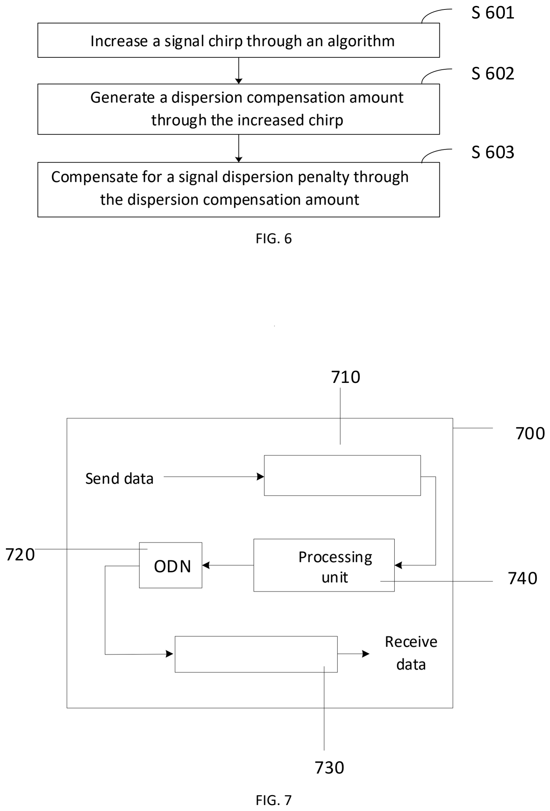

The active optical device includes the first modulator. The laser is connected with one end of the first modulator. FIG. 7 shows a schematic structural diagram of a passive optical network system. As shown, a processing unit 740 is a first modulator. Optionally, the first modulator may be a frequency modulator or a phase modulator. In the figure, 710 is a laser which is connected with one end of the processing unit 740. 710 may further include a digital signal processing module and a digital-analog conversion processing module in step S301 above, which are configured to pre-process a signal to be sent.

As an example, when the above signal is emitted by a DML, a time-domain baseband electric field signal output by the DML may be expressed as Formula (3) below.

$$E_b(t) = \sqrt{P_{max} \cdot d(t)} \cdot e^{j\int_0^t \left( \omega(\tau) + \frac{\alpha}{2} \left( \underbrace{\frac{\partial(\ln(d(\tau)))}{\partial\tau}}_{\text{①}} + \underbrace{2\pi k P_{max} d(\tau)}_{\text{②}} \right) \right) d\tau} \quad (3)$$

$P_{max}$ is maximum emitted light power of the DML, d(t) is a loaded electric signal, $\omega(\tau) = 2\pi f$ is phase noise introduced by a DML line width, f denotes a frequency, $\alpha$ is a chirp line width enhancing factor, and k is a second chirp coefficient. A chirp in a DML module is divided into a first chirp (part ① in Formula (3)) and a second chirp (part ② in Formula (3)). The first chirp is related to the chirp line width enhancing factor $\alpha$, the first chirp introduces a frequency offset at a rising edge and a falling edge of the electric signal, and the second chirp generates a frequency offset at an entire phase of the electric signal, a size of which is related to the chirp line width enhancing factor $\alpha$ and the second chirp coefficient k. The first modulator adopted in the present embodiment is essentially designed to implement a modulation function of the part ② in Formula (3) at an optical signal phase, adding one frequency modulation signal to the optical phase of the aforementioned signal to increase the signal chirp.

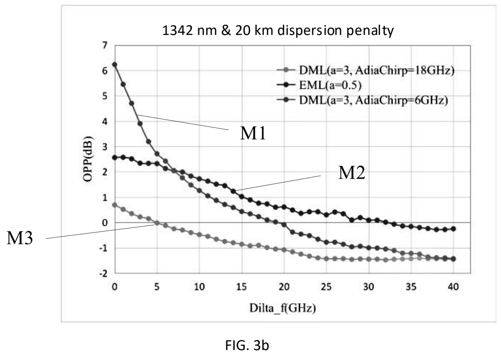

Exemplarily, FIG. 3b shows a simulation diagram of a dispersion penalty of a 1342 nm wavelength in 20 km optical fiber transmission. The abscissa axis represents different frequencies modulated by the first modulator (i.e., an increased second chirp amount), and the ordinate axis represents a dispersion penalty. M1 denotes a dispersion penalty of a signal with $\alpha$=3 and a second chirp being 6 GHz emitted by the DML; M2 denotes a dispersion penalty of a signal with $\alpha$=0.5 emitted by an electro-absorption modulated laser (EML); and M3 denotes a dispersion penalty of a signal with $\alpha$=3 and a second chirp being 18 GHz emitted by the DML. In the figure, $\alpha$ is the chirp line width enhancing factor, and intrinsic parameters are related to own characteristics of the laser, and are determined when the device is designed. At a zero point of the abscissa, the ordinate axis represents a dispersion penalty for downstream wavelength transmission of 20 km corresponding to a simulation model as defined by the ad hoc discussion group of the International Telecommunication Union (ITU). It can be seen that all three signals above exhibit significant dispersion penalties, and the dispersion penalties cannot be completely compensated by a DSP compensation technology under an existing intensity modulation direct detection architecture. By adopting the embodiment of the present application, the chirp corresponds to the abscissa. As the abscissa increases, it indicates the increasing chirp, and an increasing frequency chirp signal of a modulating signal. The transmission penalties of M1, M2, and M3 shift from positive penalties to negative penalties by compensation, demonstrating improved optical fiber transmission performance.

S303: a dispersion compensation amount is generated through the increased chirp.

This step may adopt the descriptions of S102 in the embodiment of FIG. 1, which is omitted here.

S304: a downlink signal with an increased chirp is transmitted from an optical line terminal (OLT) to an optical network unit (ONU) via an optical distribution network (ODN).

The other end of the first modulator is connected with the ODN. The optical distribution network (ODN) is located between the optical line terminal (OLT) and the optical network unit (ONU), and includes but is not limited to an optical fiber and an optical splitter. As shown in FIG. 7, the OLT is located in 710, the ONU is located in 730, the other end of the processing unit 740 is connected with the ODN 720, and the downlink signal is transmitted along arrow directions.

S305: a dispersion penalty of the downlink signal is compensated by the OLT through the dispersion compensation amount.

This step may adopt the descriptions of S103 in the embodiment of FIG. 1, which is omitted here.

Optionally, before the OLT receives the downlink signal, the downlink signal is subjected to digital signal processing to compensate for inter-symbol interference, dispersion, noise or nonlinear performance.

In an implementation, compensating for the signal dispersion penalty through the dispersion compensation amount further includes transmitting an uplink signal with an increased chirp from the ONU to the OLT via the ODN. A dispersion penalty of the uplink signal is compensated by the ONU through the dispersion compensation amount.

Specifically, as shown in FIG. 7, the ONU is located in 710, the OLT is located in 730, the other end of the processing unit 740 is connected with the ODN 720, and the uplink signal is transmitted along arrow directions. This step may adopt the descriptions of S103 in the embodiment of FIG. 1, which is omitted here.

In the signal compensation method provided by the embodiment of the present application, the signal is sent via the laser after digital signal processing and digital-analog conversion processing in the passive optical network (PON); frequency or phase modulation is performed on the signal through the first modulator to increase the signal chirp, wherein the laser is connected with one end of the first modulator; the dispersion compensation amount is generated through the increased chirp; the downlink signal with the increased chirp is transmitted from the optical line terminal (OLT) to the optical network unit (ONU) via the optical distribution network (ODN), wherein the other end of the first modulator is connected with the ODN; the dispersion penalty of the downlink signal is compensated by the OLT through the dispersion compensation amount; the uplink signal with the increased chirp is transmitted from the ONU to the OLT via the ODN; and the dispersion penalty of the uplink signal is compensated by the ONU through the dispersion compensation amount. It can solve the problems that, in the related art, an optical fiber transmission dispersion penalty in a PON system is lowered by reducing a chirp and a dispersion amount in an optical fiber channel or adopting a DSP compensation manner, and this scheme is complex and cannot fully compensate for a performance loss penalty. It is easier to compensate for the dispersion penalty through existing active optical devices.

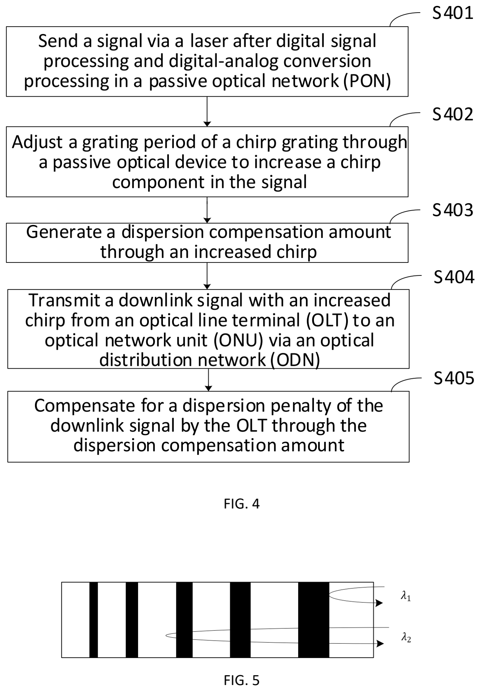

FIG. 4 shows a third schematic flowchart of a signal compensation method provided by an embodiment of the present application. As shown, the method may include the following steps.

S401: a signal is sent via a laser after digital signal processing and digital-analog conversion processing in a passive optical network (PON).

This step may adopt the descriptions of S301 in the embodiment of FIG. 3, which is omitted here.

S402: a grating period of a chirp grating is adjusted through a passive optical device to increase a chirp component in the signal.

The passive optical device includes at least one of the chirp grating or a chirp compensation optical fiber, and the laser is connected with one end of the passive optical device. Light of different wavelengths passes through different paths in the above chirp grating and generates different delays. When a wavelength of an optical signal emitted by the laser is located in a positive dispersion zone of an optical fiber, a component with a higher frequency in the optical signal has the smaller transmission delay in the optical fiber, that is, a transmission rate is higher; on the contrary, a component with a lower frequency has a lower transmission rate in the optical fiber. In a case corresponding to a positive chirp of the laser, a chirp in the optical signal also has this effect of delaying transmission of optical signals with different frequencies. In a case of a positive dispersion of the optical fiber, the chirp grating may refer to FIG. 5, where $\lambda$ denotes a wavelength, and $\lambda_1 < \lambda_2$. Through a non-uniform period design, the component with the higher frequency in the signal in the positive dispersion zone of the optical fiber is preferentially reflected back into the optical fiber, while reflection of the component with the lower frequency is delayed. Correspondingly, in a case of negative dispersion of the optical fiber, the component with the lower frequency in the signal in a negative dispersion zone of the optical fiber is preferentially reflected back into the optical fiber, while reflection of the component with the higher frequency is delayed, thus achieving the effect of the increased chirp.

Optionally, as shown in FIG. 7, the processing unit 740 is the passive optical device, and the passive optical device may be at least one of the chirp grating or the chirp compensation optical fiber. 710 is the laser which is connected with one end of the processing unit 740. 710 further includes a digital signal processing module and a digital-analog conversion processing module in step 401 above, which are configured to pre-process data to be sent.

S403: a dispersion compensation amount is generated through the increased chirp.

This step may adopt the descriptions of S102 in the embodiment of FIG. 1, which is omitted here.

S404: a downlink signal with an increased chirp is transmitted from an optical line terminal (OLT) to an optical network unit (ONU) via an optical distribution network (ODN).

The other end of the chirp grating is connected with the ODN. This step may adopt the descriptions of S304 in the embodiment of FIG. 3, which is omitted here.

S405: a dispersion penalty of the downlink signal is compensated by the OLT through the dispersion compensation amount.

This step may adopt the descriptions of S103 in the embodiment of FIG. 1, which is omitted here.

In an implementation, compensating for the signal dispersion penalty through the dispersion compensation amount further includes transmitting an uplink signal with an increased chirp from the ONU to the OLT via the ODN. A dispersion penalty of the uplink signal is compensated by the ONU through the dispersion compensation amount.

Specifically, as shown in FIG. 7, the ONU is located in 710, the OLT is located in 730, the other end of the processing unit 740 is connected with the ODN 720, and the uplink signal is transmitted along arrow directions. This step may adopt the descriptions of S103 in the embodiment of FIG. 1, which is omitted here.

In the signal compensation method provided by the embodiment of the present application, the signal is sent via the laser after digital signal processing and digital-analog conversion processing in the passive optical network (PON); the grating period of the chirp grating is adjusted through at least one of the chirp grating or the chirp compensation optical fiber to increase the chirp component in the signal, wherein the laser is connected with one end of the chirp grating or the chirp compensation optical fiber; the dispersion compensation amount is generated through the increased chirp; the downlink signal with the increased chirp is transmitted from the optical line terminal (OLT) to the optical network unit (ONU) via the optical distribution network (ODN), wherein the other end of the chirp grating is connected with the ODN; the dispersion penalty of the downlink signal is compensated by the OLT through the dispersion compensation amount; the uplink signal with the increased chirp is transmitted from the ONU to the OLT via the ODN; and the dispersion penalty of the uplink signal is compensated by the ONU through the dispersion compensation amount. Through the existing passive optical device, it can solve the problems that, in the related art, an optical fiber transmission dispersion penalty in a PON system is lowered by reducing a chirp and a dispersion amount in an optical fiber channel or adopting a DSP compensation manner, and this scheme is complex and cannot fully compensate for a performance loss penalty.

FIG. 6 shows a fourth schematic flowchart of a signal compensation method provided by an embodiment of the present application. As shown, the method may include the following steps.

S601: a signal chirp is increased through an algorithm.

Specifically, according to the descriptions of Formula (1) in the embodiment of FIG. 1, the magnitude-frequency response of the signal is superposition of frequency responses of a plurality of chirps. According to the calculation formula $\mathrm{H}_{\mathrm{adb}}(f, \mathrm{L}) = \mathrm{j}\frac{\alpha \mathrm{kP}}{2\pi f}\sin(\gamma \mathrm{L}f^2)$ for the second chirp in Formula (1), it may be determined that the frequency responses of the chirps are related to a frequency f of the signal. Referring to FIG. 8, according to a relationship between frequencies and phases, a modulated chirp signal may be compensated through the algorithm; a phase of the above signal is compensated through the chirp signal; and the compensated phase of the above signal is converted to a magnitude change of the signal so as to increase the signal chirp.

Optionally, the algorithm may be set in a digital signal processing module, i.e., in 710 shown in FIG. 7, or set in a processing unit 740.

S602: a dispersion compensation amount is generated through the increased chirp.

This step may adopt the descriptions of S102 in the embodiment of FIG. 1, which is omitted here.

S603: a signal dispersion penalty is compensated through the dispersion compensation amount.

This step may adopt the descriptions of S103 in the embodiment of FIG. 1, which is omitted here.

In the signal compensation method provided by the embodiment of the present application, the signal chirp is increased through the algorithm; the dispersion compensation amount is generated through the increased chirp; and the signal dispersion penalty is compensated through the dispersion compensation amount. Through the algorithm, it can solve the problems that, in the related art, an optical fiber transmission dispersion penalty in a PON system is lowered by reducing a chirp and a dispersion amount in an optical fiber channel or adopting a DSP compensation manner, and this scheme is complex and cannot fully compensate for a performance loss penalty. Therefore, there is no need to modify an existing PON system.

FIG. 7 shows a schematic structural diagram of a passive optical network system provided by an embodiment of the present application. The passive optical network system 700 includes 710, an ODN 720, 730 and a processing unit 740, where 710 may be an OLT or an ONU, and 730 may be the OLT or the ONU, which are not specifically defined here. Said 710 is connected with the ODN 720 through the processing unit, and the processing unit 740 is configured to increase a signal chirp; generate a dispersion compensation amount through the increased chirp; and compensate for a signal dispersion penalty through the dispersion compensation amount.

Optionally, the processing unit 740 includes: a passive optical device. The passive optical device includes at least one of a chirp grating or a chirp compensation optical fiber.

Optionally, the processing unit 740 includes: a chirp grating, a first optical circulator and an optical amplifier; a first end of the first optical circulator is connected with a transmitting end of a laser through the chirp grating, a second end of the first optical circulator is connected with a transmitting end of a signal transmitting apparatus, and a third end of the first optical circulator is connected with the ODN 720 through the optical amplifier. Through said 710, a signal is sent to the chirp grating via the laser after digital signal processing and digital-analog conversion processing; a grating period of the signal is adjusted through the chirp grating; and the signal is amplified by the optical amplifier and transmitted into the first optical circulator, such that a signal with a high frequency in the signal is reflected to an optical fiber transmission channel first.

Optionally, the processing unit 740 includes: a first modulator, and the first modulator includes at least one of a frequency modulator or a phase modulator.

Optionally, the chirp includes: an adiabatic chirp.

The passive optical network system 700 provided by the embodiment of the present application can perform the methods described in the foregoing method embodiments, and achieve the functions and beneficial effects of the methods described in the foregoing method embodiments, which are omitted here.

An electronic device in an embodiment of the present application exists in various forms, including but not limited to the following devices.

(1) Mobile communication devices: such devices have the characteristic of having mobile communication functions, with providing voice and data communication as the main goal. Such terminals include: smart phones (such as iPhones), multimedia phones, functional phones, and low-end phones.

(2) Ultra mobile personal computer devices: such devices belong to the category of personal computers, have computing and processing functions, and generally have mobile internet access characteristics. Such terminals include: PDAs, MIDs, UMPC devices, etc., such as iPads.

(3) Portable entertainment devices: such devices may display and play multimedia content. Such devices include: audio and video players (such as iPods), handheld game consoles, e-books, as well as smart toys and portable vehicle-mounted navigation devices.

(4) Servers: devices that provide computing services. A server is composed of a processor, a hard disk, a memory, a system bus, etc. The server is similar to a general-purpose computer architecture, but due to the need to provide highly reliable services, it has high requirements for processing power, stability, reliability, security, scalability, manageability and other aspects.

(5) Other electronic apparatuses with data interaction functions.

Further, an embodiment of the present application further provides a computer-readable storage medium. The computer-readable storage medium is configured to store computer-executable instructions. The computer-executable instructions, when executed by a processor, implement the following procedure: increasing a signal chirp; generating a dispersion compensation amount through the increased chirp; and compensating for a signal dispersion penalty through the dispersion compensation amount.

Thus, the computer-executable instructions, when executed by the processor, can perform the methods described in the foregoing method embodiments, and achieve the functions and beneficial effects of the methods described in the foregoing method embodiments, which are omitted here.

The computer-readable storage medium includes: a read-only memory (ROM), a random access memory (RAM), a magnetic disk or an optical disk, etc.

Further, an embodiment of the present application further provides a computer program product. The computer program product includes a computer program stored on a non-transitory computer-readable storage medium, the computer program includes program instructions, and the program instructions, when executed by a computer, implement the following procedure: increasing a signal chirp; generating a dispersion compensation amount through the increased chirp; and compensating for a signal dispersion penalty through the dispersion compensation amount.

Thus, executing the computer program product provided by the embodiment of the present application can perform the methods described in the foregoing method embodiments, and achieve the functions and beneficial effects of the methods described in the foregoing method embodiments, which are omitted here.

The various embodiments in this specification are described in a progressive manner, and the same or similar parts between the various embodiments may be referred to each other. Each embodiment focuses on contents different from other embodiments. In particular, as for the system embodiments, as they are basically similar to the method embodiment, the description is relatively simple. As for related parts, please refer to part of the description in the method embodiments.

The above is merely the embodiments of the present application and is not intended to limit the present application. For those skilled in the art, the present application may have various modifications and changes. Any modifications, equivalent replacements, improvements, etc. made within the spirit and principle of the present application shall fall within the scope of the claims of the present application.

**Claims**

1. A signal compensation method, comprising:

      increasing a signal chirp;
      generating a dispersion compensation amount through the increased chirp; and
      compensating for a signal dispersion penalty through the dispersion compensation amount.

2. The method according to claim 1, wherein increasing the signal chirp comprises: increasing the signal chirp through at least one of the following: an active optical device; a passive optical device; or algorithm compensation.

3. The method according to claim 2, wherein the active optical device comprises a first modulator, and increasing the signal chirp comprises:

      sending a signal via a laser after digital signal processing and digital-analog conversion processing in a passive optical network (PON); and
      performing frequency or phase modulation on the signal through the first modulator to increase the signal chirp, wherein the laser is connected with one end of the first modulator.

4. The method according to claim 3, wherein compensating for the signal dispersion penalty through the dispersion compensation amount comprises:

transmitting a downlink signal with an increased chirp from an optical line terminal (OLT) to an optical network unit (ONU) via an optical distribution network (ODN), wherein the other end of the first modulator is connected with the ODN; and

compensating for a dispersion penalty of the downlink signal by the OLT through the dispersion compensation amount.

5. The method according to claim 3, wherein compensating for the signal dispersion penalty through the dispersion compensation amount further comprises:

transmitting an uplink signal with an increased chirp from an ONU to an OLT via an ODN, wherein the other end of the first modulator is connected with the ODN; and

compensating for a dispersion penalty of the uplink signal by the ONU through the dispersion compensation amount.

6. The method according to claim 2, wherein the passive optical device comprises at least one of a chirp grating or a chirp compensation optical fiber, and increasing the signal chirp comprises:

sending a signal via a laser after digital signal processing and digital-analog conversion processing in a passive optical network (PON); and

adjusting a grating period of the chirp grating through the passive optical device to increase a chirp component in the signal, wherein the laser is connected with one end of the passive optical device.

7. The method according to claim 6, wherein compensating for the signal dispersion penalty through the dispersion compensation amount comprises:

transmitting a downlink signal with an increased chirp from an optical line terminal (OLT) to an optical network unit (ONU) via an optical distribution network (ODN), wherein the other end of the passive optical device is connected with the ODN; and

compensating for a dispersion penalty of the downlink signal by the OLT through the dispersion compensation amount.

8. The method according to claim 6, wherein compensating for the signal dispersion penalty through the dispersion compensation amount further comprises:

transmitting an uplink signal with an increased chirp from an ONU to an OLT via an ODN, wherein the other end of the passive optical device is connected with the ODN; and

compensating for a dispersion penalty of the uplink signal by the ONU through the dispersion compensation amount.

9. The method according to claim 2, wherein increasing the signal chirp comprises:

modulating a chirp signal through algorithm compensation;

compensating for a phase of a signal through the chirp signal; and

converting a compensated phase of the signal to a magnitude change of the signal so as to increase the signal chirp.

10. The method according to claim 1, wherein the chirp comprises: an adiabatic chirp.

11. A passive optical network system, comprising: an OLT and an ONU connected through an ODN, wherein the passive optical network system further comprises:

a processing unit, wherein the ONU is connected with the ODN through the processing unit, and the processing unit is configured to increase a signal chirp; generate a dispersion compensation amount through the increased chirp; and compensate for a signal dispersion penalty through the dispersion compensation amount.

12. The passive optical network system according to claim 11, wherein the processing unit comprises at least one of a chirp grating or a chirp compensation optical fiber.

13. The passive optical network system according to claim 11, wherein the processing unit comprises: a chirp grating, a first optical circulator and an optical amplifier; a first end of the first optical circulator is connected with a transmitting end of a laser through the chirp grating, a second end of the first optical circulator is connected with a transmitting end of a signal transmitting apparatus, and a third end of the first optical circulator is connected with the ODN through the optical amplifier;

a signal is sent to the chirp grating via the laser through the ONU after digital signal processing and digital-analog conversion processing;
a grating period of the signal is adjusted through the chirp grating; and
the signal is amplified by the optical amplifier and transmitted into the first optical circulator, such that a signal with a high frequency in the signal is reflected to an optical fiber transmission channel first.

14. The passive optical network system according to claim 11, wherein the processing unit comprises: a first modulator, and the first modulator comprises at least one of a frequency modulator or a phase modulator.

15. The passive optical network system according to claim 11, wherein the chirp comprises: an adiabatic chirp.

16. An electronic device, comprising a processor, a memory and a program or instruction stored on the memory and capable of running on the processor, wherein the program or instruction, when executed by the processor, implements the steps of the signal compensation method according to any one of claims 1 to 10.

17. A readable storage medium, storing a program or instruction thereon, wherein the program or instruction, when executed by a processor, implements the steps of the signal compensation method according to any one of claims 1 to 10.

```
                                                                    ⟋⟍ S101
┌─────────────────────────────────────────────────────────┐
│                  Increase a signal chirp                │
└─────────────────────────────────────────────────────────┘
                            │
                            ▼                               ⟋⟍ S102
┌─────────────────────────────────────────────────────────┐
│          Generate a dispersion compensation amount       │
│                  through the increased chirp             │
└─────────────────────────────────────────────────────────┘
                            │
                            ▼                               ⟋⟍ S103
┌─────────────────────────────────────────────────────────┐
│          Compensate for a signal dispersion penalty      │
│          through the dispersion compensation amount      │
└─────────────────────────────────────────────────────────┘
```

FIG. 1

FIG. 2a

FIG. 2b

S301

Send a signal via a laser after digital signal processing and digital-analog conversion processing in a passive optical network (PON)

S302

Perform frequency or phase modulation on the signal through a first modulator to increase a signal chirp

S303

Generate a dispersion compensation amount through the increased chirp

S304

Transmit a downlink signal with an increased chirp from an optical line terminal (OLT) to an optical network unit (ONU) via an optical distribution network (ODN)

S305

Compensate for a dispersion penalty of the downlink signal by the OLT through the dispersion compensation amount

FIG. 3a

FIG. 3b

S401

Send a signal via a laser after digital signal processing and digital-analog conversion processing in a passive optical network (PON)

S402

Adjust a grating period of a chirp grating through a passive optical device to increase a chirp component in the signal

S403

Generate a dispersion compensation amount through an increased chirp

S404

Transmit a downlink signal with an increased chirp from an optical line terminal (OLT) to an optical network unit (ONU) via an optical distribution network (ODN)

S405

Compensate for a dispersion penalty of the downlink signal by the OLT through the dispersion compensation amount

FIG. 4

$\lambda_1$

$\lambda_2$

FIG. 5

S 601

Increase a signal chirp through an algorithm

S 602

Generate a dispersion compensation amount through the increased chirp

S 603

Compensate for a signal dispersion penalty through the dispersion compensation amount

FIG. 6

710

700

Send data

720

ODN

Processing unit

740

Receive data

730

FIG. 7

| Send a signal | According to Formula (1), compensate for a phase of a signal to increase a second chirp | | Convert information of the compensated phase to a magnitude change | Compensated signal |

FIG. 8

## INTERNATIONAL SEARCH REPORT

| International application No. |
|---|
| **PCT/CN2023/132405** |

**A. CLASSIFICATION OF SUBJECT MATTER**

H04B 10/2513(2013.01)i

According to International Patent Classification (IPC) or to both national classification and IPC

**B. FIELDS SEARCHED**

Minimum documentation searched (classification system followed by classification symbols)

IPC:H04B; H01S

Documentation searched other than minimum documentation to the extent that such documents are included in the fields searched

Electronic data base consulted during the international search (name of data base and, where practicable, search terms used)

CNTXT, ENTXTC, CNKI: 变大, 波长, 补偿, 不同, 调大, 反射, 负色散, 路径, 频率, 色散, 时延, 延迟, 优先, 增大, 增加, 增强, 正色散, 啁啾; enlarge, increase, different, chirp, dispersion, compensation, delay, wavelength, frequency

**C. DOCUMENTS CONSIDERED TO BE RELEVANT**

| Category* | Citation of document, with indication, where appropriate, of the relevant passages | Relevant to claim No. |
|---|---|---|
| PX | CN 116865859 A (ZTE CORP.) 10 October 2023 (2023-10-10)<br>claims 1-17 | 1-17 |
| X | US 2003086647 A1 (WILLNER, A. E. et al.) 08 May 2003 (2003-05-08)<br>description, paragraphs 87-114 | 1-3, 6, 9-10, 16-17 |
| Y | US 2003086647 A1 (WILLNER, A. E. et al.) 08 May 2003 (2003-05-08)<br>description, paragraphs 87-114 | 4-5, 7-8, 11-15 |
| Y | WO 2012032566 A1 (HITACHI LTD.) 15 March 2012 (2012-03-15)<br>claim 1 | 4, 7, 11-15 |
| Y | JP 2008072638 A (KDDI CORP.) 27 March 2008 (2008-03-27)<br>description, paragraphs 35-38 | 5, 8 |
| A | US 6710916 B1 (ONETTA INC.) 23 March 2004 (2004-03-23)<br>entire document | 1-17 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **06 February 2024** | **07 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/132405**

| Patent document cited in search report | | | Publication date (day/month/year) | Patent family member(s) | | | Publication date (day/month/year) |
|---|---|---|---|---|---|---|---|
| CN | 116865859 | A | 10 October 2023 | None | | | |
| US | 2003086647 | A1 | 08 May 2003 | US | 6915040 | B2 | 05 July 2005 |
| WO | 2012032566 | A1 | 15 March 2012 | JPWO | 2012032566 | A1 | 31 October 2013 |
| | | | | JP | 5416844 | B2 | 12 February 2014 |
| JP | 2008072638 | A | 27 March 2008 | JP | 4760636 | B2 | 31 August 2011 |
| US | 6710916 | B1 | 23 March 2004 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310304008